# EUROPÄISCHE PATENTANMELDUNG

(11) **EP 0 805 281 A1**
(43) Veröffentlichungstag der Anmeldung: **05.11.1997**
(21) Anmeldenummer: 97106505.7
(22) Anmeldetag: 19.04.1997
(51) Int. Cl.: F16B 7/04, E04B 1/58

(54) **Verbindungsanordnung mit zwei stabförmigen Profilen**

(30) Priorität: 03.05.1996 DE 19617653
(71) Anmelder: FRIATEC AG Keramik- und Kunststoffwerke, D-68229 Mannheim (DE)
(72) Erfinder: Pieplow, Karl-Heinz, 48431 Rheine (DE); Schweigert, Adolf, 88682 Salem (DE); Scharr, Roland, 70182 Stuttgart (DE)
(74) Vertreter: Schmitt, Meinrad, Dipl.-Ing.

(57) **Zusammenfassung**

Eine Verbindungsanordnung enthält zwei stabförmige Profile (2, 3), welche jeweils wenigstens eine, vorzugsweise in einem Eckbereich angeordnete Ausnehmung (6, 7) aufweisen, sowie ein Verbindungselement (5), welches mit den Ausnehmungen (6, 7) in Eingriff steht. Diese Verbindungsanordnung soll dahingehend weitergebildet werden, daß eine einfache Handhabung gewährleistet ist und eine klare Trennung verschiedener Klassen von Montageoperationen erreicht wird. Es wird vorgeschlagen, daß die Ausnehmungen (6, 7) rohrförmig ausgebildet sind und einen sich auf eine Symmetrieachse (26) beziehenden Querschnitt aufweisen. Das Verbindungselement (5) enthält einen koaxial zur Symmetrieachse in der jeweiligen Ausnehmung (6) angeordneten Körper (4', 4), dessen Außenfläche (14) zumindest teilweise an der Innenfläche (8) der zugeordneten Ausnehmung (6) anliegt.

## Beschreibung

Die Erfindung bezieht sich auf eine Verbindungsanordnung mit Wenigstens zwei stabförmigen Profilen gemäß den im Oberbegriff des Patentanspruchs 1 angegebenen Merkmalen.

Aus der deutschen Veröffentlichung DE 31 52 347 T1 gemäß der internationalen Anmeldung WO 82/01054 ist eine derartige Verbindungsanordnung bekannt, welche für Gerüste oder dergleichen zum Einsatz gelangt und als rohrförmige Streben ausgebildete stabförmige Profile sowie Verbindungselemente in Form von Halteklammern enthält. Das jeweilige Profil besitzt einen im Prinzip quadratischen Querschnitt mit vier sich über die gesamte Länge erstreckenden Längsnuten oder Ausnehmungen, jeweils im Bereich der Ecken des Profils. Zwischen jeweils zwei dieser Längsnuten ist ein Steg vorhanden, dessen Wände zum Zentrum des stabförmigen Profils keilförmig zulaufen und somit von der Außenfläche des stabförmigen Profils betrachtet hintergriffig ausgebildet sind. Die beiden Halteklammern des Verbindungselements umgreifen den Steg und ragen mit ihren vorderen Enden in die beiden genannten Längsnuten ein, wobei die Enden der Halteklammern mit ihren Anlageflächen gleichfalls zum Zentrum des Profils abgewinkelt sind. Die anderen Enden der Halteklammern ragen in einen inneren Hohlraum eines weiteren Profils ein, welches orthogonal zu dem erstgenannten Profil angeordnet und mit diesem verbunden ist. Die Halteklammern besitzen einen komplexen Aufbau und mittels einer Schraubverbindung wird einerseits der genannte Steg des erstgenannten Profils eingeklemmt und andererseits werden die in das weitere Profil ragenden Enden gegeneinander derart verspannt, daß sie unter Vorspannung an der Innenfläche des weiteren Profils anliegen. Die Fertigung der einzelnen Komponenten dieser Verbindungsanordnung erfordert einen nicht unerheblichen Aufwand und die Handhabung bei der Montage und Herstellung einer Verbindung zwischen den Profilen erweist sich als schwierig und zeitaufwendig. Das stabförmige Profil muß zwingend als ein Hohlprofil ausgebildet sein und die Herstellung von Verbindungen der Profile unter Winkeln abweichend von einem rechten Winkel sind nicht ohne weiteres herstellbar.

Ferner ist aus dem US Patent 3 597 858 ein Bausatz mit vorgefertigten Elementen zur Errichtung eines weitgehend vorgefertigten Gebäudes im Rastermaß bekannt. Die Elemente enthalten Platten, an deren Rändern Profilstege mit im wesentlichen zylindrischer Außenfläche angeordnet sind. Es sind ferner Verbindungselemente vorhanden, weiche korrespondierend zu den Profilstegen der Platten ausgebildet sind und diese Profilstege teilweise umgreifen. Die Profilstege und ebenso die Verbindungselemente bestehen aus Kunststoff und dessen Elastizität ermöglicht das Einsetzen der Profilstege in die zylindrisch ausgebildeten Ausnehmungen der Verbindungselemente. Die Verbindungselemente umgreifen die im wesentlichen zylindrische Außenfläche des Profilsteges in einem Winkel größer 180°. Die Stabilität einer mit derartigen Elementen aufgebauten Konstruktion resultiert maßgeblich von den Platten selbst. Eine selbsttragende Rahmenkonstruktion ist mit dem vorbekannten Platten und Verbindungselementen nicht ohne weiteres herstellbar, zumal der Verbindungsbereich zwischen den Profilstegen und den Platten vergleichsweise schmal ausgebildet ist, um Relativbewegungen der Platten bezüglich der Verbindungselemente zu ermöglichen.

Hiervon ausgehend liegt der Erfindung die Aufgabe zugrunde, die Verbindungsanordnung der genannten Art dahingehend auszubilden, daß eine einfache Handhabung bei funktionssicherer Konstruktion gewährleistet ist. Es soll eine klare Trennung der verschiedenen Klassen der Montageoperationen, nämlich Positionieren, Justieren und Fixieren, erreicht werden.

Die erfindungsgemäße Verbindungsanordnung ermöglicht bei einfacher Handhabung eine schnelle und problemlose Montage und Herstellung der Verbindung. Die Verbindungsanordnung ermöglicht den Aufbau eines Stabwerks, in welchem das erfindungsgemäß ausgebildete Profil als Boden-Stab und/oder horizontaler Decken-Stab und/oder schräger Decken-Stab und/oder Vertikal-Stab und/oder Horizontal-Stab zum Einsatz gelangen kann. Die Verbindungsanordnung ermöglicht in einem Stabwerk die Herstellung von beliebigen horizontalen Wandkopplungen. Ferner können problemlos Anschlüsse an beliebig geneigte Decken hergestellt werden. Das Profil enthält vorzugsweise in allen vier Ecken röhrenförmige Ausnehmungen mit einem sich auf eine Symmetrieachse beziehenden Querschnitt. Diese Symmetrieachse bildet die Drehachse für ein Verbindungselement, welches um diese Achse um einen vorgegebenen Winkel schenkbar ist. Die Innenfläche der jeweiligen röhrenförmigen Ausnehmung kann im Rahmen der Erfindung zylindrisch oder derart ausgebildet sein, daß zumindest die der Symmetrieachse am nächstliegenden Teilbereiche der Innenfläche auf einem zur Achse koaxialen Zylindermantel angeordnet sind. So können zwischen den vorstehend genannten Teilbereichen von der Achse weiter entfernte Bereiche liegen. Auch kann die Innenfläche eine Riffelung aufweisen, deren der Achse nächstliegenden "Spitzen" auf der koaxialen Zylindermantelfläche liegen. Die röhrenförmige Ausnehmung erstreckt sich über einen Winkelbereich größer als 180° derart, daß der eingesetzte Einsatzkörper des Verbindungselements von der Innenfläche umklammert und gesichert wird. So kann das Verbindungselement von einer axialen Stirnfläche her in die Ausnehmung eingeschoben und bis zur gewünschten Axialposition verschoben werden. Desweiteren kann die Ausnehmung wenigstens eine seitliche Einsetzöffnung für den Einsatzkörper des Verbindungselements aufweisen, welches nach dem Einsetzen in die gewünschte axiale Position bezüglich der Längserstreckung des Profils verschiebbar ist. Weiterhin können im Rahmen der Erfindung Mittelpunkt bzw. Achse und Radius der Ausnehmungen in Relation zu den Profilkanten derart angelegt sein, daß das Verbindungselement durch Fügeverfahren des "federnden Einspreizens" oder des "Fügens durch Preßpassung", beispielsweise nach DIN 8593, in die röhrenförmig ausgebildete Ausnehmung eingebracht werden kann.

Die Profilschiene ist in zweckmäßiger Weise als Hohlprofil ausgebildet und besitzt eine hohe Festigkeit bei niedrigem Gewicht. Die Profilschiene ist in zweckmäßiger Weise aus Metall gefertigt und weist ein hohes Widerstandsmoment auf. In einer besonders zweckmäßigen Ausgestaltung weist die Profilschiene einen rechteckförmigen, vorzugsweise quadratischen Querschnitt auf, wobei in wenigstens einem der vier Eckbereiche die radial nach innen gerichtete Ausnehmung vorgesehen ist. In einer besonderen Ausgestaltung besitzt die Profilschiene einen grundsätzlich quadratischen Querschnitt und in den vier Eckbereichen ist jeweils eine radial nach innen gerichtete Ausnehmung angeordnet. Zwischen jeweils zwei in den Eckbereichen befindlichen Ausnehmungen ist eine plane Seitenfläche vorgesehen, wobei die insgesamt vier Seitenflächen einem rechteckigen, insbesondere quadratischen Querschnitt entsprechen. Durch die Ausbildung der Profilschiene als Hohlkammerprofil aus Metall wird in Kombination mit der erfindungsgemäßen Geometrie und Anordnung der Ausnehmungen und Seitenflächen mit geringem Materialeinsatz ein hohes Widerstandsmoment gewährleistet.

Die Position des Verbindungselements bleibt in der röhrenförmigen Ausnehmung ohne äußere Einwirkung beibehalten, während unter Kraftwirkung die Position des Verbindungselements in Längsrichtung und/oder um seine Achse veränderbar ist. Erfindungsgemäß ist eine formschlüssige Verbindung des Einsetzkörpers in der rohrförmigen Ausnehmung gewährleistet. Diese formschlüssige Verbindung ermöglicht ferner die Einstellung der axialen Lage und der Winkelstellung des Verbindungselements bezüglich des Profils. Der Einsatzkörper, welcher nachfolgend der Einfachheit halber als Körper bezeichnet wird, weist eine an den Zylindermantel der Ausnehmung des Profils angepaßte Außenkontur auf. So kann die Außenfläche des Körpers des Verbindungselements zumindest teilweise zylindrisch ausgebildet sein, und zwar mit im wesentlichen dem gleichen Radius wie der Radius der Zylindermantelfläche der röhrenförmigen Ausnehmung. Ferner kann die Außenfläche des Körpers derart ausgebildet sein, daß zumindest Teilbereiche auf der Zylindermantelfläche liegen. Die Außenfläche des Körpers kann im Rahmen der Erfindung mit einer Riffelung versehen sein oder als Polygon ausgebildet sein, dessen von der Achse am weitesten entfernten Bereiche auf dem genannten Zylindermantel entsprechend dem der Ausnehmung liegen. Die Einsetzrichtung des Einsetzkörpers liegt in einem vorgegebenen Winkel zur Richtung der wesentlichen zu übertragenden Kräfte. So liegt die Einsetzrichtung insbesondere in einem Winkel 45° zu den beiden Seitenflächen, welche im Bereich der Ausnehmung enden. Die maßgebliche Richtung der Haltekräfte liegt hingegen in einer Ebene im wesentlichen parallel zu der einen oder anderen Seitenfläche des Profils. Somit wird der Einsatzkörper durch die Haltekräfte an die Innenfläche der Ausnehmung durch die Haltekräfte gedrückt oder gezogen und nicht oder nur mit einer kleinen Komponente in der Einschubrichtung. Die Arretierung des Verbindungselements in der Ausnehmung ist somit funktionssicher gewährleistet.

Das Verbindungselement enthält ferner ein aus der Ausnehmung herausragendes Element, welches wiederum entsprechend dem genannten Körper oder als Steg, Klammer oder dergleichen ausgebildet ist. Mit diesem aus der Ausnehmung herausragenden Element erfolgt die Verbindung mit einem weiteren Profil oder sonstigen Bauelement. Das Verbindungselement und insbesondere dessen aus der Ausnehmung herausragendes Element kann um die durch die Ausnehmung definierte Drehachse in einem vorgegebenen Winkelbereich, stufenlos in beliebige Winkelstellungen gedreht und/oder angeordnet werden.

Enthält ein aus der erfindungsgemäßen Anordnung aufgebautes Stabwerk, wobei nachfolgend die erfindungsgemäß ausgebildeten Profile allgemein als Stäbe bezeichnet werden, beispielsweise zwei zwischen in ihren Positionen fixierte Vertikalstäbe einen Horizontal-Stab, so kann dieser in einfacher Weise durch eine Translationsbewegung positioniert werden. Nach der Positionierung kann der Horizontal-Stab problemlos in der vertikalen Richtung verschoben werden. Enthält ein Stabwerk mehrere Horizontal-Stäbe in einer Ebene, so können zwei übereinanderliegende Tragelemente bezüglich der genannten Ebene in gleicher Lage oder in sich überschneidende Lage montiert werden. Auch können Tragelemente, welche zwischen zwei in ihren Positonen justierten Horizontal-Stäben angeordnet sind, in einfacher Weise parallel zur Längsrichtung der genannten Stäbe positioniert und fixiert werden. Schließlich können derartige Tragelemente nach ihrer Positionierung orthogonal zu der Ebene, in welcher die beiden Horizontal-Stäbe angeordnet sind, verschoben werden. Des weiteren kann die Befestigung einer Beplankung auf einem Stabwerk mit Profilen und Verbindungselementen der erfindungsgemäßen Verbindungsanordnung in einfacher Weise durchgeführt werden. Die Profile können als Massivstäbe, beispielsweise aus Kunststoff, Aluminium oder Stahl, ebenso ausgebildet sein, wie als Hohlprofile, welche aus Stahlblech oder Rohren mit vorgegebener Wandstärke gefertigt sind.

Weiterbildungen und besondere Ausgestaltungen der Erfindung sind in den Unteransprüchen angegeben.

Die Erfindung soll nachfolgend anhand der in der Zeichnung dargestellten Ausführungsbeispiele näher erläutert werden. Es zeigen:
- Fig. 1: eine perspektivische Darstellung des Profilstabs mit einem zylindrischen Körper des Verbindungselements,
- Fig. 2: eine Ansicht des Profilstabs in dessen Längsrichtung,
- Fig. 3: eine Ausführungsform mit einem winkelförmig ausgebildeten Verbindungselement,
- Fig. 4: eine besondere Ausgestaltung des winkelförmigen Verbindungselements,
- Fig. 5: eine Ausführungsform, bei welcher das Verbindungselement zwei in einem Winkel > 90° zueinander angeordnete zylindrische Körper aufweist,
- Fig. 6: eine Ausführungsform mit einem Verbindungselement zwischen zwei zueinander parallelen und horizontal angeordneten Profilen,
- Fig. 7: eine Ausführungform mit einem als Clip für eine Leitung ausgebildeten Verbindungselement,
- Fig. 8: eine Ausführungsform mit vier in einem Kopplungspunkt miteinander verbundenen Profilen.

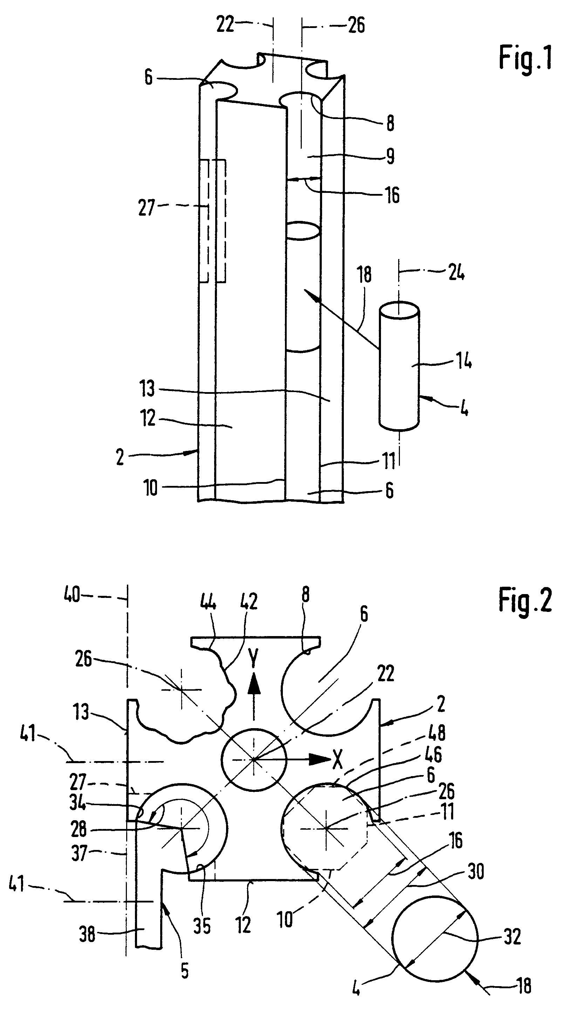

Fig. 1 zeigt in einer perspektivischen Darstellung ein stabförmig ausgebildetes Profil 2 und einen Körper 4 eines Verbindungselements 5. Aus Gründen der Systematik ist der Körper 4 des Verbindungselements 5 als ein zylindrischer Körper dargestellt, wobei im Rahmen der Erfindung ein vergleichbarer Körper, welcher eine zumindest teilweise zylindrische Außenfläche aufweist, Bestandteil von unterschiedlich ausgebildeten Verbindungselementen ist, wie es weiter unten noch im einzelnen zu erläutern ist. Das hier nur über einen Teil seiner Gesamtlänge dargestellte Profil 2 besitzt einen grundsätzlich rechteckförmigen, insbesondere quadratischen Querschnitt, wobei in jedem der vier Eckbereiche eine sich parallel zur Längsachse erstreckende rohrförmige Ausnehmung 6 vorgesehen ist. Diese vier Ausnehmungen 6 sind übereinstimmend ausgebildet und weisen eine auf die jeweilige Symmetrieachse bezogene, zylindrische Mantelfläche einen vorzugsweise kreisförmigen Querschnitt auf, welcher sich nicht vollständig über einen Umfang von 360° erstreckt. Die Ausnehmung 6 besitzt eine zylindrische Innenfläche 8, mit einer sich in Achsrichtung erstreckenden Öffnung 9, durch welche der Körper 4 in die Ausnehmung 6 eingesetzt werden kann. Die zylindrische Innenfläche erstreckt sich über einen Winkel Größe 180° und endet an zwei Längskanten 10, 11. Das Profil 2 enthält vier jeweils im rechten Winkel zueinander angeordnete Seitenflächen 12, 13, welche in der dargestellten Weise im Bereich der genannten Längskanten 10, 11 enden.

Der Körper 4 besitzt eine zylindrische Außenfläche 14, welche auf die zylindrische Innenfläche 8 der Ausnehmung 6 in der Weise abgestimmt ist, daß der Körper 4 in die Ausnehmung 6 eingefügt werden kann. Desweiteren ist die Breite der Öffnung 9 bzw. der Abstand 16 der Längskanten 10, 11 auf den Körper 4 derart abgestimmt, daß dieser in die Ausnehmung 6 eingefügt werden kann. Hierzu wird der Körper 4 in Richtung des Pfeiles 18 bewegt und durch die Öffnung 9 in die Ausnehmung 6, vorzugsweise durch Fügeverfahren des federnden Einspreizens oder des Fügens durch Preßpassung (vgl. DIN 8593), eingebracht. Die gegenseitige Abstimmung des Körpers 4 und der Ausnehmung 6 erfolgt ferner dahingehend, daß der in die Ausnehmung 6 eingebrachte Körper 4 seine Position in der Ausnehmung ohne äußere Einwirkung beibehält, unter Einwirkung einer Kraft hingegen verändert. Der Körper 4 kann durch Einwirken einer äußeren Kraft in Längsrichtung der Ausnehmung 6, also parallel zur Längsachse 22 des Profils 2, verschoben werden. Des weiteren kann der Körper 4 um seine Zylinderachse 24, welche im eingefügten Zustand übereinstimmt mit der Symmetrieachse 26 der Ausnehmung 6, gedreht werden.

Ferner wird im Rahmen der Erfindung durch Materialauswahl und/oder Oberflächengestaltung, insbesondere der Ausnehmungen 6, des Profils 2 und/oder des Körpers 4, sowie durch entsprechende Dimensionierung den jeweiligen Anforderungen der Praxis entsprochen. Das Profil 2 und/oder der vorzugsweise zylindrische Körper 4 können aus Metall ebenso gefertigt sein wie aus Kunststoff. Zweckmäßig weist insbesondere der zumindest teilweise zylindrische Körper 4 eine derartige Federelastizität auf, daß der zumindest teilweise zylindrische Körper 4 in der erläuterten Weise in die Ausnehmung 6 von einer Person manuell eingesetzt und bei Bedarf in Längsrichtung verschoben und/oder in der genannten Weise gedreht werden kann. Die Dimensionierung und/oder Materialvorgabe erfolgen dahingehend, daß die Position des zumindest teilweise zylindrischen Körpers 4 bzw. des Verbindungselements in der Ausnehmung beibehalten wird.

Es kann somit problemlos eine Grobausrichtung eines Systemelements oder Systembauteils vorgenommen werden. Zu einem späteren Zeitpunkt kann erfindungsgemäß unter Krafteinwirkung, insbesondere manuell, das Systemelement oder dergleichen exakt justiert werden. Des weiteren kann bedarfsweise mit zusätzlichen Mitteln eine Sicherung in der gewünschten Position, vorzugsweise nach Durchführung der Justierung, vorgenommen werden, wobei hier vor allem auf Spreizelemente in Kombination mit dem zylindrischen Körper und/oder auf kraft- oder formschlüssig wirkende Elemente verwiesen sei.

In einer weiteren Ausgestaltung enthält die röhrenförmige Ausnehmung 6 eine hier gestrichelt angedeutete seitliche Einsatzöffnung 27. Die Einsatzöffnung besitzt eine axiale Länge, welche zuindest gleich groß ist wie die axiale Länge des Körpers 4. Im Bereich dieser seitlichen Einsatzöffnung 27 erstreckt sich die als zylindrische Fläche ausgebildete Innenwand nur über einen Winkel in der Größenordnung von 180° derart, daß der Körper problemlos in die Ausnehmung eingesetzt werden und gemäß obigen Darlegungen axial in der Ausnehmung positioniert werden kann. In dieser alternativen Ausgestaltung weist jede der in den Ecken des Profils angeordneten Ausnehmungen jeweils wenigstens eine derartige seitliche Öffnung auf. Des weiteren können im Rahmen der Erfindung axial beabstandet pro Ausnehmung eine vorgegebene Anzahl derartiger Einsatzöffnungen zum Einsetzen des Körpers des Verbindungselements vorgesehen sein.

Fig. 2 zeigt vergrößert eine axiale Ansicht des quadratischen Profils 2, in dessen Ecken jeweils eine der erwähnten vier, übereinstimmend ausgebildeten Ausnehmungen 6 vorhanden ist. Die zylindrische Innenwand 8 der jeweiligen Ausnehmung 6 erstreckt sich über einen Winkel 28, welcher größer ist als 180° und gemäß Zeichnung etwa 260° beträgt. Der Abstand 16 zwischen den Längskanten 10, 11 ist kleiner als der Durchmesser 30 der Ausnehmung 6. Der gleichfalls dargestellte zylindrische Körper 4 besitzt einen Durchmesser 32, welcher im wesentlichen dem Durchmesser 30 der Ausnehmung 6 entspricht. Ist der zylindrische Körper 4 in die Ausnehmung 6 eingefügt, so wird er durch die an die Längskanten 10, 11 anschließenden Bereiche 34, 35 der Innenwand 8 arretiert und gegen ein selbsttätiges Herauslösen aus der Ausnehmung 6 gesichert. Beim Eindrücken des Körpers 4 in Richtung des Pfeiles 18 werden entweder die Längskanten 10, 11 auseinandergespreizt, was durch die Federelastizität des Materials insbesondere des Profils 2, gewährleistet ist, oder über die federnde Wirkung des einzupassenden zylindrischen Körpers 4. Zusätzlich oder alternativ kann im Rahmen der Erfindung die Elastizität des Körpers 4 genutzt werden, wenn dieser beispielsweise aus Kunststoff besteht oder als ein offenes Rohr aus Federstahl ausgebildet ist. Auch die Dimensionierung des Winkels 28 wird auf die Materialeigenschaften des Profils 2 und/oder des Körpers 4 abgestimmt. Für eine Fügeverbindung nach Art einer Preßprassung ist der Durchmesser 32 des Körpers 4 um einen vorgegebenen Betrag, und zwar zweckmäßig entsprechend den Normen, größer ausgebildet als der Durchmesser 30 der Ausnehmung 6.

Unten links in Fig. 2 sind mit strichpunktierten Linien 37 die theoretisch verlängerten Seitenflächen 12 und 13 für ein vollständiges Profil 2 mit quadratischem Querschnitt angedeutet. Erfindungsgemäß liegen die röhrenförmigen Ausnehmungen 6 innerhalb der idealen rechteckförmigen, insbesondere quadratischen, Außenkontur des Profils 2. Somit können weitere Bauelemente, wie Verkleidungen des Stabwerks an den Seitenflächen 12, 13 befestigt werden, ohne daß die Verbindungselemente an dieser Stelle stören. So kann das Verbindungselement ein weiteres mit dem Körper verbundenes Element, insbesondere in Form eines Steges 38, aufweisen. Dieses Element bzw. der Steg 38 steht über die Seitenfläche 13 des Profils 2 nicht vor, so daß an dieser Seitenfläche ein weiteres Bauelement, wie beispielsweise eine hier gestrickelt angedeutete Platte 40, Beplankung oder dergleichen problemlos angebracht werden kann. Die Platte 40, Beplankung oder dergleichen wird vorzugsweise mit zusätzlichen Befestigungsmitteln, welche mit strichpunktierten Linien 41 angedeutet sind, in einer besonderen Weiterbildung mit dem Profil 2 und/oder dem Verbindungselement 5 und/oder dessen herausragendem Element 38 verbunden. Als Befestigungsmittel 41 gelangen insbesondere Schrauben oder Nieten zum Einsatz. Im Bereich der oben erläuterten seitlichen Einsatzöffnung 27 erstreckt sich die Innenfläche der Ausnehmung nur über einen Winkelbereich in der Größenordnung von 180°, so daß der Körper des Verbindungselements ohne weiteres eingesetzt werden kann.

Eine alternative Ausgestaltung der röhrenförmigen Ausgestaltung 6 ist oben links in Fig. 2 dargestellt. Die Innenfläche der Ausnehmung 6 ist nicht geschlossen zylindrisch ausgebildet, sondern sie enthält nur Teilbereiche 42, welche koaxial zur Achse 26 angeordnet sind. Diese der Drehachse nächstliegenden Teilbereiche 42 der Innenfläche liegen koaxial zur Drehachse 26, während andere Bereiche 44 einen größeren Abstand aufweisen. Die Teilbereiche 42 sind Stege, deren radial nach innen weisenden Spitzen oder Flächen im Rahmen der Erfindung auf einer zylindrischen Mantelfläche bezüglich der Drehachse 26 angeordnet sind.

Eine weitere alternative Ausgestaltung des Einsatzkörpers 4 ist unten rechts mit gestrichelten Linien angedeutet. Der Körper 4 ist als Polygon ausgebildet, dessen Ecken 46, in welchen die Seitenflächen 48 sich schneiden, auf einem zur Drehachse 26 koaxialen Zylindermantel angeordnet sind. Ferner kann im Rahmen der Erfindung die Außenfläche des Körpers 4 mit einer Riffelung versehen sein oder Stege aufweisen, deren von der Zylinderachse radial den größten Abstand aufweisenden Flächenteile auf der koaxialen Zylindermantelfläche liegen.

Wesentlich ist für alle Ausführungsformen, daß die gemäß Pfeil 18 angedeutete Einsetzrichtung des Körpers 4 in einem Winkel zu der Ebene liegt, in welcher die maßgeblichen Haltekräfte wirksam sind. Die Haltekräfte wirken im wesentlichen in Richtung des aus der Ausnehmung 6 herausragenden Elements oder Stegs 38 des Verbindungselements. Für das unten links dargestellte Verbindungselement mit dem Steg 38 sind die maßgeblichen Haltekräfte in der Ebene wirksam, welche senkrecht zur Zeichenebene steht und welche parallel zur Y-Koordinate verläuft. Ist hingegen das Verbindungselement derart in die Ausnehmung eingesetzt, daß sein Steg 38 parallel zur Seitenfläche 12 liegt, so liegt die maßgebliche Haltekraftrichtung in einer Ebene im wesentlichen parallel zur Seitenfläche 12, also in einer Ebene senkrecht zur Zeichenebene und parallel zur X-Koordinate. Entsprechend der jeweiligen Einsetzrichtung des Verbindungselements 5 liegen die maßgeblichen Haltekräfte in Ebenen im wesentlichen parallel zu der einen oder anderen Seitenfläche 12 bzw. 13.

Das erfindungsgemäße Profil 2 besitzt in besonders zweckmäßiger Weise in der zur Längsachse orthogonalen Ebene einen bezüglich der X-Achse und Y-Achse symmetrischen Querschnitt. Der hier dargestellte auf einem Quadrat basierende Querschnitt des Profils 2 hat sich zwar als besonders zweckmäßig erwiesen, doch liegen im Rahmen der Erfindung auch im Prinzip rechteckförmige Querschnittsflächen, in deren Eckbereichen die erläuterten vier Ausnehmungen angeordnet sind.

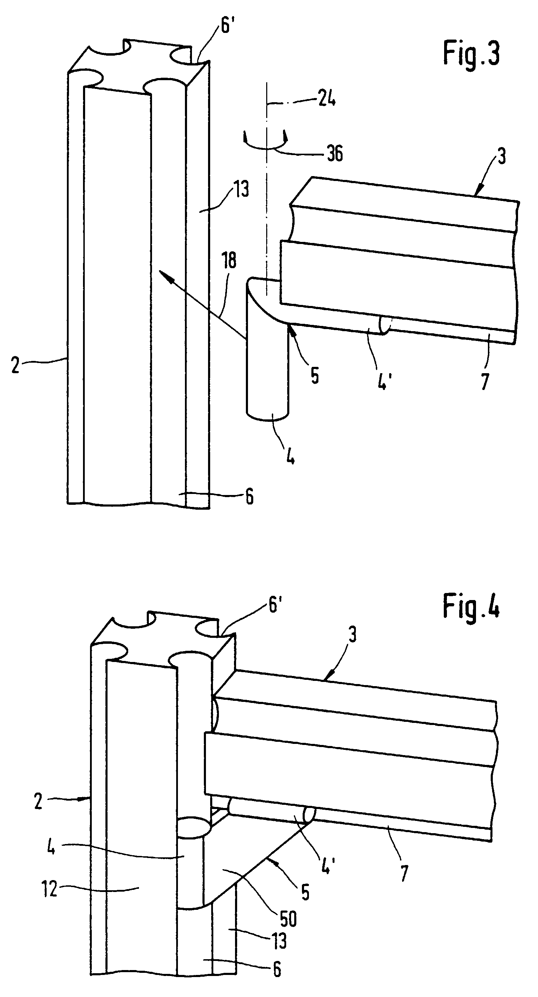

Fig. 3 zeigt die Verbindungsanordnung mit zwei orthogonalen Profilen 2, 3. Das Verbindungselement 5 ist als Winkelstück ausgebildet und besitzt zwei zueinander orthogonal angeordnete zylindrische Körper 4, 4'. Wie ersichtlich, ist der Körper 4' bereits in einer Ausnehmung 7 des Profils 3 eingefügt und der andere zylindrische Körper 4 des Verbindungselements wird in Richtung des Pfeiles 18 in die Ausnehmung 6 des Profils 2 in der vorstehend erläuterten Weise eingefügt und dannach liegt das horizontale Profil 3 mit seiner Stirnfläche eng an der Seitenfläche 13 des Profils 2 an. Bei der Montage kann unter Krafteinwirkung das horizontale Profil 3 in seiner Längsrichtung bezüglich des zylindrischen Körpers 4' derart verschoben werden, daß die Stirnfläche des Profils 3 in der dargestellten Weise eng an der Seitenfläche 13 zur Anlage gebracht wird. Geht man von dem Profil 2 mit der röhrenförmigen Ausnehmung 6 aus, so ist in dieser der Körper 4 eingesetzt und der Körper 4' bildet das aus der Ausnehmung 6 erfindungsgemäß herausragende Element. Bei dieser symmetrischen Ausgestaltung des Verbindungselements 5 gilt dieser Sachverhalt entsprechend umgekehrt bezogen auf das Profil 3, in dessen röhrenförmiger Ausnehmung 7 der weitere zylindrische Körper 4' angeordnet ist. Sofern nur ein einziges Verbindungselement in den Ausnehmungen 6 und 7 vorgesehen, so kann das Profil 3, nach dem Einfügen des zylindrischen Körpers 4 in die Ausnehmung 6 des Profils 2 um die Dreh- oder Zylinderachse 24 entsprechend dem Pfeil 36 geschwenkt werden. Die erfindungsgemäße Verbindungsanordnung ermöglicht folglich den Anschluß und die Verbindung der Profile in der jeweils erforderlichen Winkellage zueinander.

Ferner kann im Rahmen der Erfindung auch in der gemäß Fig. 3 hinteren Ausnehmung 6' übereinstimmend ein weiteres Verbindungselement angeordnet sein, welches entsprechend in die untere hintere Ausnehmung des horizontalen Profils 3 eingreift. So können zur Montage die beiden Profile 2, 3 beispielsweise zunächst nur mit dem hier dargestellten vorderen Verbindungselement 5 miteinander verbunden werden, wobei auch die erläuterte Drehbewegung um die Drehachse 24 durchgeführt werden kann. Danach wird die axiale Stirnfläche des Profils 3 zur Anlage an die Seitenfläche 13 des Profils 2 gebracht und in einem weiteren Schritt wird dann das hintere Verbindungselement eingesetzt. Aufgrund dieser zweifachen Verbindung wird eine besonders dauerhafte Befestigung und gegenseitige Verbindung der beiden Profile 2 und 3 sichergestellt.

Fig. 4 zeigt eine weitere Ausgestaltung der Erfindung mit einem Verbindungssteg 50 des Verbindungselements 5. Die beiden Körper 4 und 4' sind nicht unmittelbar wie in Fig. 3 in dem Eck miteinander verbunden, sondern enden in einem vorgegebenen Abstand vor dem theoretischen gegenseitigen Schnittpunkt. Der Verbindungssteg 50 ist im wesentlichen dreieckförmig ausgebildet und ist bezogen auf beide Ausnehmungen 6 und 7 das aus diesen herausragende Element. Diese Ausführungsform gewährleistet ein einfaches und gleichwohl funktionssicheres Einsetzen des Verbindungselements 5.

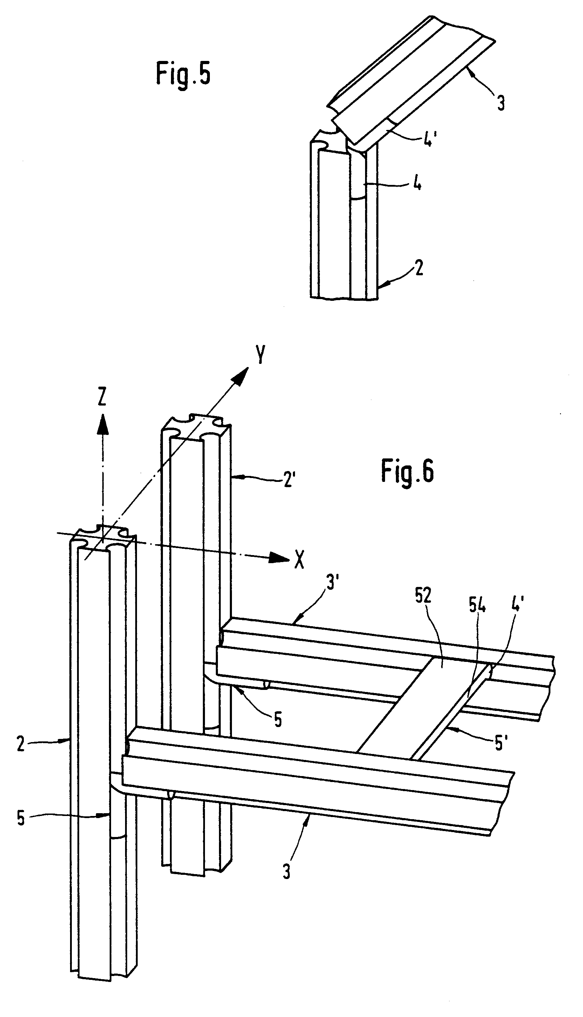

Fig. 5 zeigt eine Ausführungsform mit einem Verbindungselement, dessen zylindrische Körper 4, 4' in einem Winkel größer 90°, beispielsweise 135°, zueinander angeordnet sind. Die miteinander verbundenen Profile 2, 3 weisen demgemäß eine entsprechende Winkellage zueinander auf. Entsprechend kann in einem Stabwerk das Profil 2 vertikal ausgerichtet sein und das Profil 3 als schräger Deckenstab dienen.

Fig. 6 zeigt ein Ausführungsbeispiel gemäß welchem in einer ersten vertikalen Ebene mit den Koorinaten Z und X die Profile 2, 3 und in einer zweiten, hierzu parallelen Vertikalebene die Profile 2', 3', welche jeweils miteinander mittels winkelförmigen Verbindungselementen 5 gekoppelt sind. Zwischen den beiden horizontalen Profilen 3 und 3' ist ein weiteres Verbindungselement 5' vorgesehen, welches einen mittleren Steg 54 aufweist. An jedem Ende des Stegs 54 sind zumindest teilweise zylindrische Körper 4' angeordnet, welche in die zugeordneten Ausnehmungen der zueinander parallelen Profile 3, 3' der erläuterten Weise eingreifen. Die nach oben weisende Oberfläche 52 des Steges 54 ist derart angeordnet, daß sie in der gleichen horizontalen Ebene bündig liegt wie die oberen Seitenflächen der beiden Profile 3 und 3'. Somit kann eine Platte oder Beplankung oder dergleichen über die gemäß Fig. 6 nach oben weisenden Seitenflächen der beiden Profile 3 und 3' gelegt werden, ohne daß das brückenartig ausgebildete Verbindungselement 5' störend im Weg wäre, welches erfindungsgemäß den Steg 54 mit den jeweils am Ende parallel angeordneten beiden Körpern aufweist.

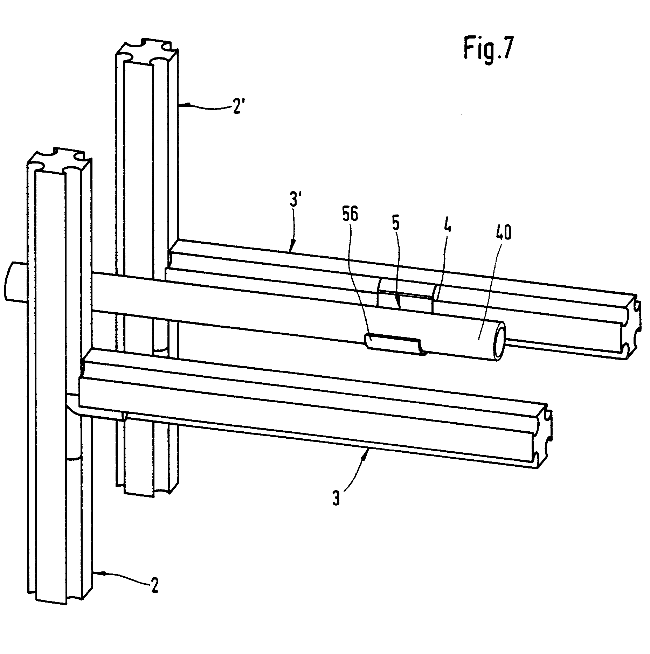

Fig. 7 zeigt eine weitere Ausgestaltung ähnlich Fig. 6, wobei ein Verbindungselement 5 als ein Einhängeclip mit einer Klammer 56 für eine Leitung 40 ausgebildet ist. Auch dieses als Clip oder Bügel ausgebildetete Verbindungselement 5 enthält einen zumindest teilweise zylindrischen Körper 4, der in die eine Ausnehmung des Profils 3 in der dargestellten Weise eingefügt ist.

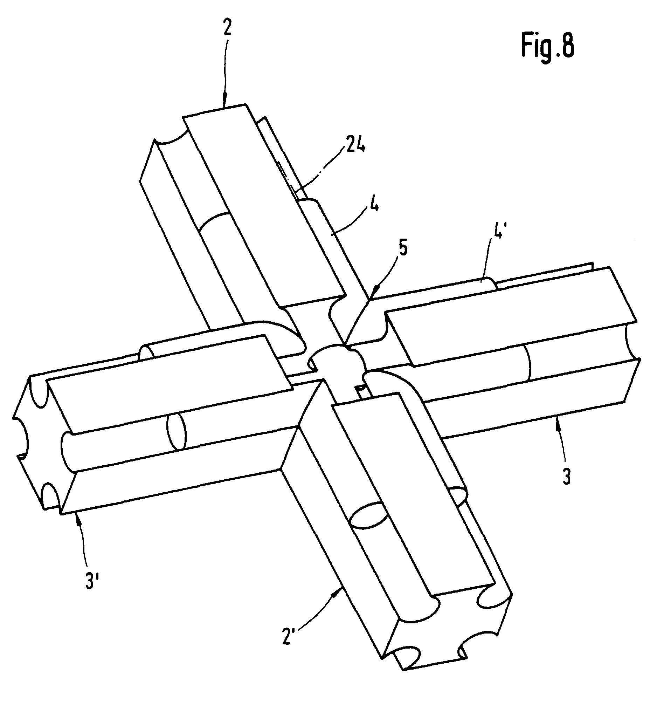

Schließlich zeigt Fig. 8 ein Ausführungsbeispiel als Kopplungspunkt von vier jeweils orthogonal zueinander angeordneten Profilen der erfindungsgemäßen Art. Es sind vier winkelförmig ausgebildete Verbindungselemente 5 vorhanden, deren zylindrische Körper 4, 4' in die entsprechend orthogonal angeordneten Ausnehmungen benachbarter Profile 2, 2',3, 3' eingreifen.

Der in Fig. 8 dargestellte Knotenpunkt kann auf eine maximale Anzahl von sechs orthogonalen Profilen ergänzt werden. Hierzu kann beispielsweise das gemäß Fig. 8 oben rechts dargestellte Verbindungselement 5 um die Zylinderachse 24 des zylindrischen Körpers 4 um 90° derart gedreht angeordnet sein, daß der zylindrische Körper 4' nicht in das Profil 3 eingreift, sondern nach vorn aus der Zeichenebene hervorsteht, um so die Verbindung mit einer fünften vor der Zeichenebene liegenden Profil zu ermöglichen. Entsprechend kann hinter der Zeichenebene gemäß Fig. 8 ein sechstes Profil angeordnet werden, wobei dort entsprechend weitere Verbindungselemente angeordnet sind.

Alternativ zu der in Fig. 8 dargestellten Ausführungsform könnten beispielsweise die Stäbe 3 und 3' als ein einziger durchgehender Stab ausgebildet sein, an welche seitlich die Profilstäbe 2 und 2' mittels Verbindungselementen in der bereits erläuterten Weise angesetzt und mit diesen verbunden sind.

### Bezugszeichen

- 2, 3: Profil / Stab
- 4, 4': Körper / Einsatzkörper
- 5: Verbindungselement
- 6, 7: Ausnehmung
- 8: Innenfläche von 6
- 9: Öffnung von 6
- 10, 11: Längskante
- 12, 13: Seitenfläche von 2
- 14: Außenfläche von 4
- 16: Abstand zwischen 10, 11
- 18: Pfeil
- 22: Längsachse von 2
- 24: Zylinderachse von 4
- 26: Symmetrieachse von 6
- 27: Einsetzöffnung
- 28: Winkel
- 30: Durchmesser von 6
- 32: Durchmesser von 4
- 34, 35: Bereich von 8
- 36: Pfeil
- 37: strichpunktierte Linie
- 38: herausragendes Element / Steg
- 40: Platte
- 41: Befestigungsmittel
- 42: Teilbereich
- 44: beabstandete Bereiche
- 46: Kante
- 48: Seitenfläche
- 50: Verbindungssteg
- 52: Oberfläche von 54
- 54: Steg
- 56: Klammer

## Patentansprüche

1. Verbindungsanordnung mit zwei stabförmigen Profilen (2, 3), welche jeweils wenigstens eine, vorzugsweise in einem Eckbereich angeordnete Ausnehmung (6, 7) aufweisen, und mit einem Verbindungselement (5), welches mit den beiden Ausnehmungen (6, 7) der Profile (2, 3) in Eingriff steht,
dadurch gekennzeichnet, daß die Ausnehmungen (6, 7) rohrförmig ausgebildet sind, daß die Ausnehmung (6, 7) einen sich auf eine Symmetrieachse (26) beziehenden Querschnitt aufweist und daß das Verbindungselement (5) einen koaxial zur Symmetrieachse (26) in der jeweiligen Ausnehmung (6, 7) angeordneten Körper (4', 4) aufweist, dessen Außenfläche (14) zumindest teilweise an der Innenfläche (8) der zugeordneten Ausnehmung (6, 7) anliegt.

2. Verbindungsanordnung nach Anspruch 1, dadurch gekennzeichnet, daß von der Innenfläche (8) zumindest Teilbereich (42), welche zur Symmetrieachse (26) den geringsten Abstand aufweisen, auf einem zur Symmetrieachse (26) koaxialen Zylindermantel angeordnet sind.

3. Verbindungsanordnung nach Anspruch 1 oder 2, dadurch gekennzeichnet, daß die Außenfläche (14) des Körpers (4) zumindest teilweise auf einem Zylindermantel angeordnet sind, dessen Achse (24) koaxial zur Symmetrieachse (26) der Ausnehmung (6) angeordnet ist.

4. Verbindungsanordnung, insbesondere nach einem der Ansprüche 1 bis 3, dadurch gekennzeichnet, daß der Körper (4) des Verbindungselements (5) formschlüssig in der Ausnehmung (6) angeordnet ist und/oder daß die Ausnehmung (6) den Körper (4) über einen Winkel (28) umgreift, welcher größer als 180° ist, und / oder daß der Körper (4) des Verbindungselements (5) in der Ausnehmung (6) derart mit einer vorgegebenen Kraft gehalten ist, daß eine Einstellung der axialen Position und/oder der Winkelstellung bezüglich des Profils (2) durchführbar ist.

5. Verbindungsanordnung nach einem der Ansprüche 1 bis 4, dadurch gekennzeichnet, daß der Körper (4) des Verbindungselements (4, 5) in die Ausnehmung (6) durch ein Fügeverfahren des federnden Einspreizens oder des Fügens durch Preßpassung einfügbar ist und/oder daß das Verbindungselement (4, 5) seine Position in der Ausnehmung (6) ohne äußere Einwirkung beibehält, während unter Krafteinwirkung die Position veränderbar ist.

6. Verbindungsanordnung, insbesondere nach einem der Ansprüche 1 bis 5, dadurch gekennzeichnet, daß die stabförmigen Profile (2, 3) einen rechteckförmigen, vorzugsweise quadratischen Querschnitt aufweisen, daß in wenigstens zwei Ecken des jeweiligen Profils eine Ausnehmung (6, 7) vorhanden ist und daß zwischen den Ausnehmungen (6, 7) eine im wesentlichen plane Seitenfläche (12, 13) vorgesehen ist.

7. Verbindungsanordnung nach einem der Ansprüche 1 bis 6, dadurch gekennzeichnet, daß die Position des Verbindungselements (5) in der Ausnehmung (6) in Richtung deren Symmetrieachse (26) und/oder um einen vorgegebenen Winkel bezüglich dieser Symmetrieachse (26) stufenlos veränderbar ist.

8. Verbindungsanordnung nach einem der Ansprüche 1 bis 7, dadurch gekennzeichnet, daß das Verbindungselement (5) ein aus der Ausnehmung (6) herausragendes Element aufweist, welches als Steg (38, 54) oder als Clip oder Klammer (56) oder welches als ein weiterer Körper (4') ausgebildet ist, welcher in einer entsprechende Ausnehmung eines weiteren Profils (3) einsetzbar ist, und / oder daß die beiden Körper (4, 4') in einem rechten Winkel zueinander angeordnet sind und vorzugsweise mit dem Steg (38, 54) miteinander verbunden sind.

9. Verbindungsanordnung, insbesondere nach einem der Ansprüche 1 bis 8, dadurch gekennzeichnet, daß die auf die Symmetrieachse (26) bezogene Ausnehmung (6) derart im Eckbereich des Profils (2) angeordnet ist, daß der vervollständigte Zylindermantel der Ausnehmung (6) innerhalb der durch die Seitenflächen (12, 13) des Profils (2) vorgegebenen Kontur angeordnet ist.

10. Verbindungsanordnung nach einem der Ansprüche 1 bis 9, dadurch gekennzeichnet, daß das Verbindungselement (5), insbesondere dessen aus der Ausnehmung (6) herausragendes Element (38), bezüglich der durch die Seitenfläche (12) des Profils (2) vorgegebenen Ebene auf der gleichen Seite wie das Profil (2) angeordnet ist.

11. Verbindungsanordnung nach einem der Ansprüche 1 bis 10, dadurch gekennzeichnet, daß die Innenfläche (8) der Ausnehmung (6) an Längskanten (10, 11) enden, in deren Bereich die äußeren Seitenflächen (12, 13) des Profils (2) anschließen, wobei die Längskanten (10, 11) einen Abstand (16) aufweisen, welcher kleiner ist als der Durchmesser (30) der Ausnehmung (6) und/oder der Durchmesser (32) des Verbindungselements (5).

12. Verbindungsanordnung nach einem der Ansprüche 1 bis 11, dadurch gekennzeichnet, daß das Profil (2) in einer zur Längsachse (22), welche eine Z-Koordinate definiert, orthogonalen Ebene einen bezüglich den durch die X- und Y-Koordinaten, welche die Längsachse (22) schneiden, symmetrischen Querschnitt aufweist.
